# EUROPÄISCHE PATENTSCHRIFT

(11) **EP 2 831 571 B1**
(45) Veröffentlichungstag und Bekanntmachung des Hinweises auf die Patenterteilung: **02.08.2017**
(21) Anmeldenummer: 13704118.2
(22) Anmeldetag: 14.02.2013
(51) Int. Cl.: G01N 27/406

(54) **VERFAHREN UND VORRICHTUNGEN ZUM BETREIBEN EINES BEHEIZBAREN ABGASSENSORS**
METHOD AND APPARATUS FOR OPERATING A HEATABLE EXHAUST SENSOR
PROCEDE ET APPAREILS POUR FAIRE FONCTIONNER UN CAPTEUR CHAUFFABLE DE GAS

(30) Priorität: 27.03.2012 DE 102012204899
(43) Veröffentlichungstag der Anmeldung: 04.02.2015
(73) Patentinhaber: Robert Bosch GmbH, 70442 Stuttgart (DE)
(72) Erfinder: BEVOT, Claudius, 70197 Stuttgart (DE); SCHULZ, Thomas, 74321 Bietigheim-Bissingen (DE); REISCHL, Rolf, 70499 Stuttgart (DE); KRAEMER, Ralf, 72127 Kusterdingen (DE); ENGELKE, Frank, 70499 Stuttgart (DE); GESS, Andreas, 72810 Gomaringen (DE)
(86) Internationale Anmeldenummer: PCT/EP2013/052972
(87) Internationale Veröffentlichungsnummer: WO 2013/143767

(56) Entgegenhaltungen:
- DE-A1- 19 743 644
- DE-A1-102008 042 268
- US-A- 5 759 367
- US-A1- 2004 045 824

## Beschreibung

Die vorliegende Erfindung betrifft ein Verfahren und Vorrichtung an zum Betreiben eines beheizbaren Abgassensors.

### Stand der Technik

Zum Betreiben von Brennkraftmaschinen werden Abgassensoren wie beispielsweise Lambda- oder NOx-Sensoren eingesetzt, mit deren Sensorsignalen die Brennkraftmaschine gesteuert wird, um beispielsweise geeignete Bedingungen für eine wirkungsvolle Abgasreinigung in einer Abgasreinigungsanlage sicherzustellen.

Insbesondere Abgassensoren, die einen ionenleitenden Festelektrolyten aufweisen, wie beispielsweise Lambda- oder NOx-Sensoren, benötigen eine bestimmte Betriebstemperatur, um die notwendige Ionenleitfähigkeit des Festelektrolyten zu erreichen. Zudem hängt die Messgenauigkeit von der Temperatur eines solchen Sensors ab. Daher ist es im Allgemeinen erforderlich, die Sonde zu beheizen und die Temperatur zu kontrollieren und normalerweise zu regeln. Zur Messung der Temperatur wird in der Regel auf ein separates Thermoelement verzichtet. Stattdessen kann beispielsweise auf den stark temperaturabhängigen Innenwiderstand Rᵢ der Abgassonde zurückgegriffen werden, um ein Messsignal für die Sensortemperatur zu erhalten. Ein weiteres Messsignal, welches der beheizbare Abgassensor zur Verfügung stellt, ist beispielsweise die Nernst-Spannung, welche eine Aussage darüber zulässt, ob sich ein an den Elektroden befindliches Messgas im thermodynamischen Gleichgewicht befindet.

Aufgrund der vergleichbar hohen Betriebsströme einer Sensorheizung, die normalerweise mit einer impulsbreitenmodulierten Spannung betrieben wird, können von den Impulsflanken verursachte Störungen auftreten, welche das wenigstens eine vom beheizten Abgassensor bereitgestellte Messsignal beeinflussen kann.

In der DE 10 2008 042 268 A1 ist eine Vorgehensweise zum Betreiben eines beheizbaren Abgassensors beschrieben, bei welchem die Erfassung der Messsignale in Abhängigkeit von der impulsbreitenmodulierten Betriebsspannung der Sensorheizung festgelegt ist. Die Erfassung des wenigstens einen Messsignals wird in Abhängigkeit von den Flanken der impulsbreitenmodulierten Betriebsspannung der Sensorheizung derart festgelegt, dass eine bestimmte Wartezeit nach dem Auftreten einer ansteigenden oder abfallenden Impulsflanke vorgegeben wird, bevor die Erfassung des Messsignals erfolgt.

Der Erfindung liegt die Aufgabe zugrunde, ein Verfahren und Vorrichtungen zum Betreiben eines beheizbaren Abgassensors anzugeben, bei denen die Sensorheizung mit einer impulsbreitenmodulierten Betriebsspannung betrieben wird und bei denen das wenigstens eine erfasste Messsignal von der impulsbreitenmodulierten Betriebsspannung der Sensorheizung möglichst wenig gestört wird.

Die Aufgabe wird durch die in den unabhängigen Ansprüchen angegebenen Merkmale jeweils gelöst.

### Offenbarung der Erfindung

Die erfindungsgemäße Vorgehensweise zum Betreiben eines beheizten Abgassensors geht davon aus, dass der beheizbare Abgassensor wenigstens ein Messsignal bereitstellt und dass die Sensorheizung mit einer impulsbreitenmodulierten Betriebsspannung betrieben wird. Die erfindungsgemäße Vorgehensweise zeichnet sich dadurch aus, dass die Erfassung des wenigstens einen Messsignals Vorrang vor der impulsbreitenmodulierten Betriebsspannung der Sensorheizung hat und dass bei einer vorgesehenen Messsignal-Erfassung während eines Messfensters die Bereitstellung der impulsbreitenmodulierten Betriebsspannung für die Sensorheizung mit einem Sperrsignal unterdrückt wird.

Die erfindungsgemäß vorgesehenen Maßnahmen ermöglichen einerseits eine vorgebbare hohe Rate bei der Erfassung des wenigstens einen vom beheizten Abgassensor bereitgestellten Messsignals und ermöglichen andererseits eine hohe Unterdrückung von möglichen Störungen des wenigstens einen Messsignals insbesondere ausgehend von den Schaltflanken der impulsbreitenmodulierten Betriebsspannung der Sensorheizung.

Vorteilhafte Weiterbildungen und Ausgestaltungen der erfindungsgemäßen Vorgehensweise sind jeweils Gegenstände von abhängigen Ansprüchen.

Die erfindungsgemäßen Vorrichtungen zur Durchführung des Verfahrens sehen entweder nur eine Abgassensorelektronik oder sowohl eine Abgassensorelektronik und ein separates Steuergerät vor.

Sofern nur eine Abgassensorelektronik vorgesehen ist, enthält die Abgassensorelektronik sowohl eine Messsignal-Bewertungsvorrichtung und einen Impulsbreitenmodulator, wobei die Messsignal-Bewertungsvorrichtung das Sperrsignal bereitstellt und dem Impulsbreitenmodulator zur Verfügung stellt.

Sofern eine Abgassensorelektronik und ein separates Steuergerät vorgesehen sind, enthält die Abgassensorelektronik die Messsignal-Bewertungsvorrichtung und das Steuergerät den Impulsbreitenmodulator. Diese Ausgestaltung kommt insbesondere zur Anwendung, wenn die Abgassensorelektronik in der Nähe des beheizbaren Abgassensors, beispielsweise in einem Stecker angeordnet ist.

Gemäß einer ersten Alternative dieser Vorrichtung ist vorgesehen, dass das Sperrsignal die in der Abgassensorelektronik enthaltene Messsignal-Bewertungsvorrichtung bereitgestellt und dass das Sperrsignal zum Schaltgerät geführt ist, welches den Impulsbreitenmodulator enthält, dem das Sperrsignal zur Verfügung gestellt wird.

Gemäß einer anderen Alternative dieser Vorrichtung ist vorgesehen, dass die Abgassensorelektronik und das separate Schaltgerät taktsynchron arbeiten, dass das Schaltgerät eine Ablaufsteuerung enthält, welche eine Information über die Messsignal-Erfassung während der Messfenster aufweist, sodass dem Schaltgerät kein Sperrsignal von der Abgassensorelektronik zugeführt werden muss und stattdessen das Sperrsignal von der Ablaufsteuerung dem im Schaltgerät enthaltenen Impulsbreitenmodulator direkt zur Verfügung gestellt ist.

Ausführungsbeispiele der Erfindung sind in der Zeichnung dargestellt und in der nachfolgenden Beschreibung näher erläutert.

### Kurzbeschreibung der Figuren

- Figur 1: zeigt eine einfache Ausgestaltung einer erfindungsgemäßen Vorrichtung mit einem beheizbaren Abgassensor und einer Abgassensorelektronik,
- Figur 2a: zeigt einen Zeitablauf von Messsignal-Erfassungsvorgängen,
- Figur 2b: zeigt eine impulsbreitenmodulierte Betriebsspannung,
- Figur 3: zeigt eine Ausgestaltung einer erfindungsgemäßen Vorrichtung mit einem beheizbaren Abgassensor und sowohl mit einer Abgassensorelektronik als auch einem Schaltgerät,
- Figur 4: zeigt eine alternative Ausgestaltung einer erfindungsgemäßen Vorrichtung mit einem beheizbaren Abgassensor und mit sowohl mit einer Abgassensorelektronik als auch einem Schaltgerät,
- Figur 5a: zeigt wieder einen Zeitablauf von Mess-Erfassungsvorgängen und
- Figur 5b: zeigt wieder eine impulsbreitenmodulierte Betriebsspannung.

### Detaillierte Beschreibung der Ausführungsbeispiele

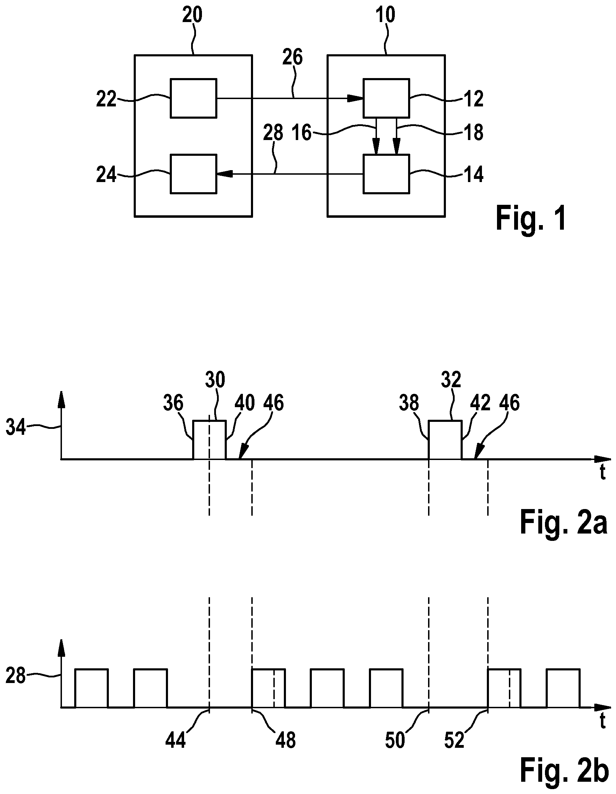

Figur 1 zeigt eine einfache Ausgestaltung einer erfindungsgemäßen Vorrichtung mit einer Abgassensorelektronik 10, die eine Messsignal-Bewertungsvorrichtung 12 sowie einen Impulsbreitenmodulator 14 enthält., Die Messsignal-Bewertungsvorrichtung 12 stellt dem Impulsbreitenmodulator 14 sowohl ein Temperatursignal 16 als auch ein Sperrsignal 18 zur Verfügung.

Vorgesehen ist weiterhin ein beheizbarer Abgassensor 20, der eine Messwert-Erfassungsvorrichtung 22 sowie eine Sensorheizung 24 enthält. Die Messwert-Erfassungsvorrichtung 22 stellt der Messsignal-Bewertungsvorrichtung 12 zumindest ein Messsignal 26 zur Verfügung. Der Impulsbreitenmodulator 14 stellt der Sensorheizung 24 eine impulsbreitenmodulierte Betriebsspannung 28 zur Verfügung.

Die Funktionsweise der in Figur 1 gezeigten Vorrichtung wird anhand der in den Figuren 2a und 2b gezeigten Signalverläufen in Abhängigkeit von der Zeit t näher erläutert. Hierbei zeigen Figur 2a einen Zeitablauf von Messsignal-Erfassungsvorgängen und Figur 2b die impulsbreitenmodulierte Betriebsspannung 28.

Bei dem beheizbaren Abgassensor 20 handelt es sich beispielsweise um einen Lambdasensor, einen HC-Sensor, einen NH3-Sensor oder beispielsweise einen NOx-Sensor. Die Sensorheizung 24 sorgt dafür, dass die Messwert-Erfassungsvorrichtung 22 auf die erforderliche Betriebstemperatur aufgeheizt wird, die in den meisten Fällen oberhalb der Abgastemperatur liegt. Die Betriebstemperatur der Messwert-Erfassungsvorrichtung 22 kann bis beispielsweise 850 Grad Celsius betragen. Zur Einstellung der Betriebstemperatur wird die Sensorheizung 24 mit der impulsbreitenmodulierten Betriebsspannung 28 beaufschlagt. Bei der impulsbreitenmodulierten Betriebsspannung 28 handelt es sich um ein digitales Signal, dessen Periodendauer und/oder das Tastverhältnis, also das Verhältnis zwischen Einschaltphase und Abschaltphase des digitalen Signals variabel festgelegt sein kann. Durch eine Variation der Periodendauer und insbesondere des Tastverhältnisses wird eine mittlere Betriebsspannung vorgegeben werden, sodass die Heizleistung gesteuert oder geregelt werden kann, um die Betriebstemperatur auf einen vorgegebenen Wert oder zumindest innerhalb eines vorgegebenen Temperaturbereichs zu halten.

Rein prinzipiell könnte die Temperatur der Sensorheizung 24 unmittelbar erfasst und dem Impulsbreitenmodulator 14 in der Abgassensorelektronik 10 als Istwert übermittelt werden. Vorliegend wird davon ausgegangen, dass das Messsignal 26 nicht nur ein Maß für die zu erfassende Abgasgröße, sondern auch ein Maß für die Betriebstemperatur der Messwert-Erfassungsvorrichtung 22 widerspiegelt. Beispielsweise können verschiedene Zeitabschnitte vorgesehen sein, wobei in einem ersten Zeitabschnitt die zu erfassende Messgröße und in einem zweiten Zeitabschnitt ein Maß für die Betriebstemperatur vorliegen. Gegebenenfalls kann die Abgassensorelektronik 10 mit einem nicht näher gezeigten Steuersignal in die Messwert-Erfassungsvorrichtung 22 des beheizbaren Abgassensors 20 eingreifen, um eine Trennung zwischen der zu erfassenden Abgasgröße und dem Maß für die Temperatur sicherzustellen.

Weiterhin kann vorgesehen sein, dass der Abgassensor 20 mehrerer Messsignale getrennt über nicht näher gezeigte unterschiedliche Leitungen zur Messsignal-Bewertungsvorrichtung 12 überträgt.

Die Messsignal-Bewertungsvorrichtung 12 ermittelt aus dem Maß für die Temperatur der Messwert-Erfassungsvorrichtung 22 das Temperatursignal 16, welches ein Maß für die Isttemperatur der Messwert-Erfassungsvorrichtung 22 widerspiegelt. Mit dem Temperatursignal 16 wird in den Impulsbreitenmodulator 14 zur Festlegung der Periodendauer und/oder des Tastverhältnisses und somit in die Festlegung der mittleren Heizleistung derart eingegriffen, dass die Isttemperatur mit der vorgegebenen Solltemperatur übereinstimmt oder innerhalb des vorgegebenen Soll-Temperaturbereichs liegt.

Die erfindungsgemäße Vorgehensweise sieht einen Vorrang der Messwert-Erfassung gegenüber der Beheizung des beheizbaren Abgassensors 20 vor. In der Praxis hat sich herausgestellt, dass die Impulsflanken der impulsbreitenmodulierten Betriebsspannung 28 zu Störungen einerseits des wenigstens einen Messsignals 26 und andererseits der Messsignal-Bewertungsvorrichtung 12 führen können.

Der Messsignal-Bewertungsvorrichtung 12 ist bekannt, wann eine Erfassung eines Messwerts und/oder eine Bewertung des Messsignals 26 stattfindet. Ein entsprechender Zeitablauf von Messsignal-Erfassungsvorgängen ist in Figur 2a gezeigt, wobei das in Figur 2a wiedergegebene Signal die Zeitfenster 30, 32 symbolisiert, während denen die Messwert-Erfassung und/oder die Messsignal-Bewertung stattfindet. Gleichzeitig spiegeln die Zeitfenster 30, 32 das Auftreten des Sperrsignals 18 wieder. Das Sperrsignal 18 tritt demnach zum Beginn 36 der Zeitfenster 30, 32 auf und sorgt dafür, dass die impulsbreitenmodulierte Betriebsspannung 28 unterdrückt wird. Das Sperrsignal 18 wird mit dem Ende 40, 42 der Zeitfenster 30, 32 zurückgenommen.

In Figur 2b, welche die impulsbreitenmodulierte Betriebsspannung 28 zeigt, ist beim ersten Zeitfenster 30 der Fall gezeigt, dass ein neuer Impuls der impulsbreitenmodulierten Betriebsspannung 28 während des ersten Zeitfensters 30 zu einem ersten Zeitpunkt 44 aufgetreten wäre, wenn es nicht durch das Sperrsignal 18 unterdrückt worden wäre. Ein neuer Impuls der impulsbreitenmodulierten Betriebsspannung 28 kann aufgrund des Sperrsignals 18 jedoch erst nach dem Ende 40 des ersten Zeitfensters 30 auftreten.

Gegebenenfalls ist noch eine Verzögerungszeit 46 vorgesehen, sodass der nächste Impuls der impulsbreitenmodulierten Betriebsspannung 28 zum zweiten Zeitpunkt 48 wieder auftreten kann. Aufgrund der zeitlichen Verzögerung des nächsten Impulses der impulsbreitenmodulierten Betriebsspannung 28 kann gegebenenfalls eine Vergrößerung des Tastverhältnisses bzw. der Impulsdauer zumindest den nächsten Impulses vorgesehen sein, um die mittlere Heizleistung einhalten zu können. Die strichliniert eingetragene Abschaltflanke wäre ohne Eingriff durch das Sperrsignal 18 aufgetreten.

Beim zweiten Zeitfenster 32 ist der Fall eingetragen, dass der Beginn 38 des zweiten Zeitfensters 32 mit der Einschaltflanke eines Impulses der impulsbreitenmodulierten Betriebsspannung zusammenfallen würde. Aufgrund des aufgetretenen Sperrsignals 18 wird der Impuls jedoch nicht bereitgestellt und für die Dauer des zweiten Zeitfensters 32 unterdrückt. Der nächste Impuls tritt erst nach dem Ende 42 des zweiten Zeitfensters 32, gegebenenfalls um die zusätzliche Verzögerungszeit 46 verzögert auf. Auch in diesem Fall kann es erforderlich sein, den nachfolgenden Impuls, der zum vierten Zeitpunkt 52 beginnt, zu verlängern, um das Einhalten der mittleren Heizleistung sicherzustellen. Auch bei diesem Impuls ist strichliniert eine Abschaltflanke eingetragen, die ohne Eingriff durch das Sperrsignal 18 aufgetreten wäre.

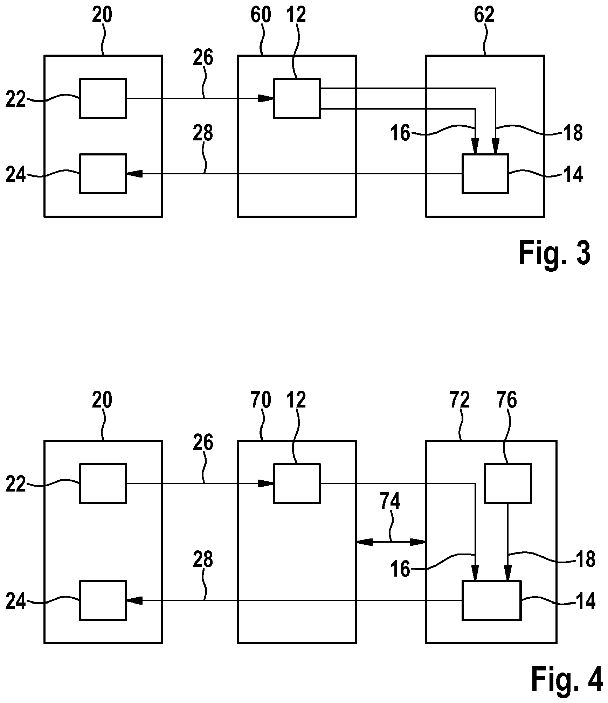

Bei der in Figur 3 gezeigten Ausgestaltung der erfindungsgemäßen Vorrichtung enthält eine Abgassensorelektronik 60 nur die Messsignal-Bewertungsvorrichtung 12. Zusätzlich zur Abgassensorelektronik 60 ist ein separates Schaltgerät 62 vorgesehen, welches zumindest den Impulsbreitenmodulator 14 enthält. Diese Ausgestaltung ist vorzugsweise vorgesehen, wenn die Abgassensorelektronik 60 näher am beheizbaren Abgassensor 20, beispielsweise in einem Steckergehäuse untergebracht ist. Zu berücksichtigen ist hierbei, dass der Impulsbreitenmodulator 14 eine Leistungselektronik darstellt, die bis zu 20 Watt elektrische Leistung für die Sensorheizung 24 zur Verfügung stellen können muss, sodass eine Integration in beispielsweise das Gehäuse eines Steckers nicht immer möglich ist. Außerdem würde der Vorteil durch die räumliche Trennung, nämlich die elektrische Entkopplung zwischen der empfindlichen Messsignal-Bewertungsvorrichtung 12 und dem Leistungsteil des Impulsbreitenmodulators 14 nicht erreicht.

Das Temperatursignal 16 und das Sperrsignal 18, welche die Messsignal-Bewertungsvorrichtung 12 bereitstellt, werden über wenigstens eine Signalleitung zum Schaltgerät 62 geführt. In Figur 3 ist eine Ausgestaltung mit zwei getrennten Leitungen gezeigt. Die impulsbreitenmodulierte Betriebsspannung 28 wird vom Schaltgerät 62 zur Sensorheizung 24 geführt, wobei die Leitung gegebenenfalls durch die Abgassensorelektronik 60 geführt wird, wie in Figur 3 angedeutet.

Die in Figur 3 gezeigte Ausgestaltung arbeitet in der gleichen Weise wie die in Figur 1 gezeigte Ausgestaltung, sodass auf die oben beschriebene Funktionsweise verwiesen wird.

Die in Figur 4 gezeigte alternative Ausgestaltung der erfindungsgemäßen Vorrichtung geht wieder von einer Abgassensorelektronik 70 und einem abgesetzt davon separaten Schaltgerät 72 aus. Bei dieser Anordnung wird davon ausgegangen, dass die Abgassensorelektronik 70 und das Schaltgerät 72 taktsynchron arbeiten, wobei sowohl der Abgassensorelektronik 70 als auch dem Schaltgerät 72 ein gemeinsames Taktsignal 74 zur Verfügung steht. Dadurch ist dem Schaltgerät 72 prinzipiell die zeitliche Position einer Messwert-Erfassung und/oder einer Messsignal-Bewertung während der Zeitfenster 30, 32 genau bekannt. Aufgrund der Synchronisierung des Taktes sind jeweils der Beginn 36, 38 sowie jeweils das Ende 40, 42 der Messfenster 30, 32 sowohl der Messsignal-Bewertungsvorrichtung 12 als auch dem Schaltgerät 72 bekannt.

Das Schaltgerät 72 enthält eine Ablaufsteuerung 76, in welcher die zeitliche Positionen der Messfenster 30, 32 bzw. jeweils der Beginn 36, 38 und jeweils das Ende 40, 42 der Messfenster 30, 32 hinterlegt sind, sodass die Ablaufsteuerung 76 das Sperrsignal 18 selbst bereitstellen kann, welches den Impulsbreitenmodulator 14 zumindest während der Messfenster 30, 32 sperrt.

Der Vorteil der in Figur 4 gezeigten Anordnung gegenüber den in den Figuren 1 und 3 gezeigten Anordnungen liegt darin, dass aufgrund der Kenntnis der zeitlichen Position der Messfenster 30, 32 die Ablaufsteuerung 76 das Sperrsignal 18 zeitlich bereits vor dem Beginn 36, 38 jeweils der Zeitfenster 30, 32 bereitstellen kann und somit in die Bereitstellung der impulsbreitenmodulierten Betriebsspannung 28 bereits vor jeweils dem Beginn 36 , 38 der Messfenster 30, 32 eingreifen kann.

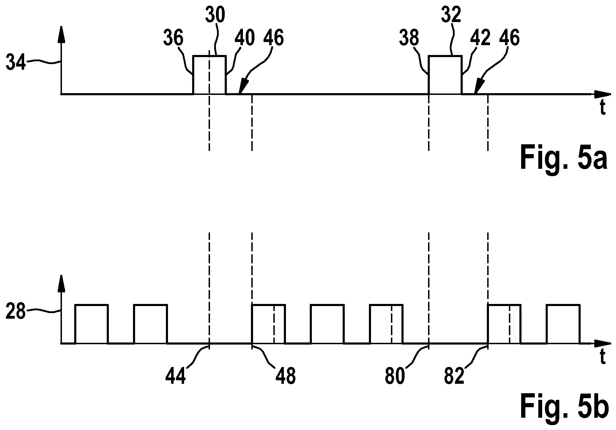

Die entsprechenden Zeitabläufe sind in den Figuren 5a und 5b gezeigt. Während im Bereich des ersten Zeitfensters 30 die zeitlichen Abläufe mit denen in den Figuren 2a und 2b gezeigten zeitlichen Abläufen übereinstimmen, soll beim zweiten Zeitfenster 32 der Fall auftreten, dass in den letzten Impuls der impulsbreitenmodulierten Betriebsspannung 28 bereits vor dem Beginn 38 des zweiten Zeitfensters 32 mittels des Sperrsignals 18 eingegriffen wird. Die strichliniert eingetragene Abschaltflanke der impulsbreitenmodulierten Betriebsspannung 28 des letzten Impulses vor dem zweiten Zeitfenster 32 spiegelt den Fall ohne Eingriff des Sperrsignals 18 wieder. Aufgrund der in der Ablaufsteuerung 76 bekannten zeitlichen Position des zweiten Messfensters 32 kann der letzte Impuls der impulsbreitenmodulierten Betriebsspannung 28 vor dem Auftreten des zweiten Zeitfensters 32 bis maximal zum Beginn 38 des zweiten Zeitfensters 32 verlängert werden. Der Vorteil dieser Maßnahme liegt darin, dass einem Absinken der mittleren Heizleistung, die während der Zeitfenster 30, 32 nicht ganz zu vermeiden ist, bereits im Voraus durch die Vergrößerung des Tastverhältnisses, das heißt, einer Verlängerung der Impulsdauer zumindest des letzten Impulses vor einem Zeitfenster 30, 32 entgegengewirkt werden kann.

Selbstverständlich wird aufgrund des vorliegenden Sperrsignals 18 ein möglicher Impuls der impulsbreitenmodulierten Betriebsspannung 28 zu einem fünften Zeitpunkt 80 zumindest bis zum Ende 42 des zweiten Zeitfensters 32 unterdrückt, wobei auch hier wieder gegebenenfalls die Verzögerungszeit 46 vorgesehen ist, sodass der erste Impuls nach dem zweiten Zeitfenster 32 zu einem sechsten Zeitpunkt 82 mit der Einschaltflanke beginnt. Zumindest der erste nachfolgende Impuls nach einem Zeitfenster 30, 32 kann wieder verlängert werden, um einem Absinken der mittleren Heizleistung entgegenzuwirken.

## Patentansprüche

1. Verfahren zum Betreiben eines beheizbaren Abgassensors (20), der wenigstens ein Messsignal (26) bereitstellt und bei dem eine Sensorheizung (24) mit einer impulsbreitenmodulierten Betriebsspannung (28) betrieben wird, **dadurch gekennzeichnet, dass** die Erfassung des wenigstens einen Messsignals (26) Vorrang vor der Bereitstellung der impulsbreitenmodulierten Betriebsspannung (28) für die Sensorheizung (24) hat und dass zumindest während eines vorgegebenen Messfensters (30, 32), in welchem das Messsignal (26) erfasst wird, die Bereitstellung der impulsbreitenmodulierten Betriebsspannung (28) für die Sensorheizung (24) mit einem Sperrsignal (18) unterdrückt wird.

2. Verfahren nach Anspruch 1, **dadurch gekennzeichnet, dass** das wenigstens eine Messsignal (26) von einer in einer Abgassensorelektronik (10) enthaltenen Bewertungsvorrichtung (12) erfasst wird, dass die impulsbreitenmodulierte Betriebsspannung (28) der Sensorheizung (24) von einem in der Abgassensorelektronik (10) enthaltenen Impulsbreitenmodulator (14) bereitgestellt wird und dass die Bewertungsvorrichtung (12) das Sperrsignal (18) dem Impulsbreitenmodulator (14) zur Verfügung stellt.

3. Verfahren nach Anspruch 1, **dadurch gekennzeichnet, dass** das wenigstens eine Messsignal (26) von einer in einer Abgassensorelektronik (60) enthaltenen Bewertungsvorrichtung (12) erfasst wird, dass die impulsbreitenmodulierte Betriebsspannung (28) der Sensorheizung (24) von einem in einem Schaltgerät (62) enthaltenen Impulsbreitenmodulator (14) bereitgestellt wird und dass die Messsignal-Bewertungsvorrichtung (12) das Sperrsignal (18) dem im Schaltgerät (62) enthaltenen Impulsbreitenmodulator (14) zur Verfügung stellt.

4. Verfahren nach Anspruch 1, **dadurch gekennzeichnet, dass** das wenigstens eine Messsignal (26) von einer in einer Abgassensorelektronik (70) enthaltenen Bewertungsvorrichtung (12) erfasst wird und dass die impulsbreitenmodulierte Betriebsspannung (28) der Sensorheizung (24) von einem in einem Schaltgerät (72) enthaltenen Impulsbreitenmodulator (14) bereitgestellt wird, wobei die Abgassensorelektronik (70) und das Schaltgerät (72) taktsynchron arbeiten, dass die zeitliche Positionen der Messfenster (30, 32) in einer Ablaufsteuerung (76) des Schaltgeräts (72) hinterlegt sind und dass die Ablaufsteuerung (76) das Sperrsignal (18) dem Impulsbreitenmodulator (14) zur Verfügung stellt.

5. Verfahren nach einem der Ansprüche 1 - 4, **dadurch gekennzeichnet, dass** eine Verzögerungszeit (46) vorgesehen ist, die sich an das Sperrsignal (18) anschließt, bis wieder ein Impuls der impulsbreitenmodulierten Betriebsspannung (28) für die Sensorheizung (24) bereitgestellt wird.

6. Vorrichtung zur Durchführung des Verfahrens nach einem der vorhergehenden Ansprüche zum Betreiben eines beheizbaren Abgassensors (20), durch den wenigstens ein Messsignal (26) bereitstellbar ist und bei dem die Sensorheizung (24) mit einer impulsbreitenmodulierten Betriebsspannung (28) betreiebar ist, **dadurch gekennzeichnet, dass** eine Abgassensorelektronik (10) vorgesehen ist, welche eine Messsignal-Bewertungsvorrichtung (12) zur Bewertung des wenigstens einen vom beheizbaren Abgassensor (20) bereitgestellten Messsignals (26) enthält, durch welche das Sperrsignal (18) für den Impulsbreitenmodulator (14) bereitstellbar ist und dass die Abgassensorelektronik (10) weiterhin den Impulsbreitenmodulator (14) zur Bereitstellung der impulsbreitenmodulierten Betriebsspannung (28) für die Sensorheizung (24) enthält.

7. Vorrichtung zur Durchführung des Verfahrens nach einem der Ansprüche 1 - 5 zum Betreiben eines beheizbaren Abgassensors (20), der wenigstens ein Messsignal (26) bereitstellt und bei dem die Sensorheizung (24) mit einer impulsbreitenmodulierten Betriebsspannung (28) betrieben wird, **dadurch gekennzeichnet, dass** eine Abgassensorelektronik (60) vorgesehen ist, welche eine Messsignal-Bewertungsvorrichtung (12) zur Bewertung des wenigstens einen vom beheizbaren Abgassensor (20) bereitgestellten Messsignals (26) enthält, welche das Sperrsignal (18) für den Impulsbreitenmodulator (14) bereitstellt und dass weiterhin ein Schaltgerät (62) vorgesehen ist, welches den Impulsbreitenmodulator (14) zur Bereitstellung der impulsbreitenmodulierten Betriebsspannung (28) für die Sensorheizung (24) enthält.

8. Vorrichtung zur Durchführung des Verfahrens nach einem der Ansprüche 1 - 5 zum Betreiben eines beheizbaren Abgassensors (20), der wenigstens ein Messsignal (26) bereitstellt und bei dem die Sensorheizung (24) mit einer impulsbreitenmodulierten Betriebsspannung (28) betrieben wird, **dadurch gekennzeichnet, dass** eine Abgassensorelektronik (70) vorgesehen ist, welche eine Bewertungsvorrichtung (12) zur Bewertung des wenigstens einen vom beheizbaren Abgassensor (20) bereitgestellten Messsignals (26) enthält, dass weiterhin ein Schaltgerät (72) vorgesehen ist, welches den Impulsbreitenmodulator (14) zur Bereitstellung der impulsbreitenmodulierten Betriebsspannung (28) für die Sensorheizung (24) enthält und welches weiterhin eine Ablaufsteuerung (76) enthält, die das Sperrsignal (18) für den Impulsbreitenmodulator (14) bereitstellt und dass Mittel vorgesehen sind, durch die ein Taktsignal (74) der Abgassensorelektronik (70) und dem Schaltgerät (72) gemeinsam zur Verfügung stellbar ist.

## Claims

1. Method for operating a heatable exhaust gas sensor (20), which provides at least one measurement signal (26) and in which a sensor heating system (24) is operated with a pulse-width-modulated operating voltage (28), **characterized in that** the capture of the at least one measurement signal (26) has priority over the provision of the pulse-width-modulated operating voltage (28) for the sensor heating system (24), and **in that** the provision of the pulse-width-modulated operating voltage (28) for the sensor heating system (24) is suppressed with a blocking signal (18) at least during a predefined measurement window (30, 32) in which the measurement signal (26) is captured.

2. Method according to Claim 1, **characterized in that** the at least one measurement signal (26) is captured by an assessment apparatus (12) included in exhaust gas sensor electronics (10), **in that** the pulse-width-modulated operating voltage (28) of the sensor heating system (24) is provided by a pulse-width modulator (14) included in the exhaust gas sensor electronics (10), and **in that** the assessment apparatus (12) provides the pulse-width modulator (14) with the blocking signal (18).

3. Method according to Claim 1, **characterized in that** the at least one measurement signal (26) is captured by an assessment apparatus (12) included in exhaust gas sensor electronics (60), **in that** the pulse-width-modulated operating voltage (28) of the sensor heating system (24) is provided by a pulse-width modulator (14) included in a switching device (62), and **in that** the measurement signal assessment apparatus (12) provides the pulse-width modulator (14) included in the switching device (62) with the blocking signal (18).

4. Method according to Claim 1, **characterized in that** the at least one measurement signal (26) is captured by an assessment apparatus (12) included in exhaust gas sensor electronics (70), and **in that** the pulse-width-modulated operating voltage (28) of the sensor heating system (24) is provided by a pulse-width modulator (14) included in a switching device (72), the exhaust gas sensor electronics (70) and the switching device (72) operating in a clock-synchronous manner, **in that** the temporal positions of the measurement windows (30, 32) are stored in a sequence controller (76) of the switching device (72), and **in that** the sequence controller (76) provides the pulse-width modulator (14) with the blocking signal (18).

5. Method according to one of Claims 1-4, **characterized in that** a delay time (46) is provided and follows the blocking signal (18) until a pulse of the pulse-width-modulated operating voltage (28) is provided again for the sensor heating system (24).

6. Apparatus for carrying out the method according to one of the preceding claims for operating a heatable exhaust gas sensor (20), which can provide at least one measurement signal (26) and in which the sensor heating system (24) can be operated with a pulse-width-modulated operating voltage (28), **characterized in that** exhaust gas sensor electronics (10) are provided and contain a measurement signal assessment apparatus (12) for assessing the at least one measurement signal (26) provided by the heatable exhaust gas sensor (20), which assessment apparatus can provide the blocking signal (18) for the pulse-width modulator (14), and **in that** the exhaust gas sensor electronics (10) also contain the pulse-width modulator (14) for providing a pulse-width-modulated operating voltage (28) for the sensor heating system (24).

7. Apparatus for carrying out the method according to one of Claims 1-5 for operating a heatable exhaust gas sensor (20), which provides at least one measurement signal (26) and in which the sensor heating system (24) is operated with a pulse-width-modulated operating voltage (28), **characterized in that** exhaust gas sensor electronics (60) are provided and contain a measurement signal assessment apparatus (12) for assessing the at least one measurement signal (26) provided by the heatable exhaust gas sensor (20), which assessment apparatus provides the blocking signal (18) for the pulse-width modulator (14), and **in that** a switching device (62) is also provided and contains the pulse-width modulator (14) for providing the pulse-width-modulated operating voltage (28) for the sensor heating system (24).

8. Apparatus for carrying out the method according to one of Claims 1-5 for operating a heatable exhaust gas sensor (20), which provides at least one measurement signal (26) and in which the sensor heating system (24) is operated with a pulse-width-modulated operating voltage (28), **characterized in that** exhaust gas sensor electronics (70) are provided and contain an assessment apparatus (12) for assessing the at least one measurement signal (26) provided by the heatable exhaust gas sensor (20), **in that** a switching device (72) is also provided and contains the pulse-width modulator (14) for providing the pulse-width-modulated operating voltage (28) for the sensor heating system (24) and also contains a sequence controller (76) which provides the blocking signal (18) for the pulse-width modulator (14), and **in that** means are provided which can jointly provide the exhaust gas sensor electronics (70) and the switching device (72) with a clock signal (74).

## Revendications

1. Procédé de mise en fonctionnement d'un capteur de gaz d'échappement chauffant (20) qui fournit au moins un signal de mesure (26) et sur lequel un chauffage de capteur (24) est mis en fonctionnement avec une tension de fonctionnement (28) modulée en largeur d'impulsion, **caractérisé en ce que** l'acquisition de l'au moins un signal de mesure (26) a priorité sur la fourniture de la tension de fonctionnement (28) modulée en largeur d'impulsion pour le chauffage de capteur (24) et **en ce qu'**au moins pendant une fenêtre de mesure (30, 32) prédéfinie au cours de laquelle le signal de mesure (26) est acquis, la fourniture de la tension de fonctionnement (28) modulée en largeur d'impulsion pour le chauffage de capteur (24) est empêchée par un signal de blocage (18).

2. Procédé selon la revendication 1, **caractérisé en ce que** l'au moins un signal de mesure (26) est acquis par un dispositif d'évaluation (12) contenu dans une électronique de capteur de gaz d'échappement (10), **en ce que** la tension de fonctionnement (28) modulée en largeur d'impulsion du chauffage de capteur (24) est fournie par un modulateur de largeur d'impulsion (14) contenu dans l'électronique de capteur de gaz d'échappement (10) et **en ce que** le dispositif d'évaluation (12) fournit le signal de blocage (18) au modulateur de largeur d'impulsion (14).

3. Procédé selon la revendication 1, **caractérisé en ce que** l'au moins un signal de mesure (26) est acquis par un dispositif d'évaluation (12) contenu dans une électronique de capteur de gaz d'échappement (60), **en ce que** la tension de fonctionnement (28) modulée en largeur d'impulsion du chauffage de capteur (24) est fournie par un modulateur de largeur d'impulsion (14) contenu dans un appareil de commutation (62) et **en ce que** le dispositif d'évaluation (12) du signal de mesure fournit le signal de blocage (18) au modulateur de largeur d'impulsion (14) contenu dan l'appareil de commutation (62).

4. Procédé selon la revendication 1, **caractérisé en ce que** l'au moins un signal de mesure (26) est acquis par un dispositif d'évaluation (12) contenu dans une électronique de capteur de gaz d'échappement (70) et **en ce que** la tension de fonctionnement (28) modulée en largeur d'impulsion du chauffage de capteur (24) est fournie par un modulateur de largeur d'impulsion (14) contenu dans un appareil de commutation (72), dans lequel l'électronique de capteur de gaz d'échappement (70) et l'appareil de commutation (72) fonctionnent avec des horloges synchrones, **en ce que** les positions temporelles des fenêtres de mesure (30, 32) sont stockées dans une unité de commande séquentielle (76) de l'appareil de commutation (72) et **en ce que** l'unité de commande séquentielle (76) fournit le signal de blocage (18) au modulateur de largeur d'impulsion (14).

5. Procédé selon l'une quelconque des revendications 1 - 4, **caractérisé en ce qu'**il est prévu une unité à retard (46) qui se connecte au signal de blocage (18) jusqu'à ce qu'une impulsion de la tension de fonctionnement (28) modulée en largeur d'impulsion soit de nouveau fournie pour le chauffage de capteur (24).

6. Dispositif destiné à la mise en oeuvre du procédé selon l'une quelconque des revendications précédentes pour mettre en fonctionnement un capteur de gaz d'échappement chauffant (20) au moyen duquel au moins un signal de mesure (26) peut être fourni et sur lequel le chauffage de capteur (24) peut être mis en fonctionnement avec une tension de fonctionnement (28) modulée en largeur d'impulsion, **caractérisé en ce qu'**il est prévu une électronique de capteur de gaz d'échappement (10) qui contient un dispositif d'évaluation (12) du signal de mesure, destiné à évaluer l'au moins un signal de mesure (26) fourni par le capteur de gaz d'échappement chauffant (20), au moyen duquel le signal de blocage (18) peut être fourni au modulateur de largeur d'impulsion (14) et **en ce que** l'électronique de capteur de gaz d'échappement (10) contient en outre le modulateur de largeur d'impulsion (14) destiné à fournir la tension de fonctionnement (28) modulée en largeur d'impulsion pour le chauffage de capteur (24).

7. Dispositif destiné à la mise en oeuvre du procédé selon l'une quelconque des revendications 1 - 5, pour mettre en fonctionnement un capteur de gaz d'échappement chauffant (20) qui fournit au moins un signal de mesure (26) et sur lequel le chauffage de capteur (24) peut être mis en fonctionnement avec une tension de fonctionnement (28) modulée en largeur d'impulsion, **caractérisé en ce qu'**il est prévu une électronique de capteur de gaz d'échappement (60) qui contient un dispositif d'évaluation (12) du signal de mesure destiné à évaluer l'au moins un signal de mesure (26) fourni par le capteur de gaz d'échappement chauffant (20), lequel dispositif d'évaluation fournit le signal de blocage (18) destiné au modulateur de largeur d'impulsion (14) et **en ce qu'**il est en outre prévu un appareil de commutation (62) qui contient le modulateur de largeur d'impulsion (14) destiné à fournir la tension de fonctionnement (28) modulée en largeur d'impulsion pour le chauffage de capteur (24).

8. Dispositif destiné à la mise en oeuvre du procédé selon l'une quelconque des revendications 1 - 5 pour mettre en fonctionnement un capteur de gaz d'échappement chauffant (20) qui fournit au moins un signal de mesure (26) et sur lequel le chauffage de capteur (24) est mis en fonctionnement avec une tension de fonctionnement (28) modulée en largeur d'impulsion, **caractérisé en ce qu'**il est prévu une électronique de capteur de gaz d'échappement (70) qui contient un dispositif d'évaluation (12) destiné à évaluer l'au moins un signal de mesure (26) fourni par le capteur de gaz d'échappement chauffant (20), **en ce qu'**il est en outre prévu un appareil de commutation (72) qui contient le modulateur de largeur d'impulsion (14) destiné à fournir la tension de fonctionnement (28) modulée en largeur d'impulsion pour le chauffage de capteur (24) et qui contient en outre une unité de commande séquentielle (76) qui fournit le signal de blocage (18) destiné au modulateur de largeur d'impulsion (14) et **en ce qu'**il est prévu des moyens avec lesquels un signal d'horloge (74) peut être délivré en commun à l'électronique de capteur de gaz d'échappement (70) et à l'appareil de commutation (72).
